# EUROPÄISCHE PATENTANMELDUNG

(11) **EP 4 169 771 A1**
(43) Veröffentlichungstag der Anmeldung: **26.04.2023**
(21) Anmeldenummer: 21204243.6
(22) Anmeldetag: 22.10.2021
(51) Int. Cl.: B60Q 1/00, B08B 5/02, B60S 1/54, F21S 45/10, F21S 45/33, B60S 1/56

(54) **ABSCHLUSSSCHEIBEN-REINIGUNGSSYSTEM**

(71) Anmelder: ZKW Group GmbH, 3250 Wieselburg (AT)
(72) Erfinder: Jackl, Christian, 3250 Wieselburg (AT); Pitterle, Georg, 3241 Kirnberg an der Mank (AT)
(74) Vertreter: Patentanwaltskanzlei Matschnig & Forsthuber OG

(57) **Zusammenfassung**

Die Erfindung betrifft ein Abschlussscheiben-Reinigungssystem umfassend eine Abschlussscheibe (101) zum Verschließen einer Öffnung eines Gehäuses (102) sowie eine Reinigungsvorrichtung (103), wobei die Abschlussscheibe (101) transparent ausgebildet ist, wobei die Reinigungsvorrichtung (103) über einen Luftauslass (108) eine Außenfläche der Abschlussscheibe (101) mit einem Luftstrom zur Reinigung beaufschlagen kann. Die Reinigungsvorrichtung weist an einer Unterseite (103a) ein oder mehrere, in einen Außenraum führende Entwässerungsöffnungen (109) auf, über welche in der Reinigungsvorrichtung (103) befindliche Feuchtigkeit bzw. Flüssigkeit, etwa Wasser, austreten kann. Oberhalb der zumindest einen Entwässerungsöffnungen (109) ist ein Membran-Element (106) angeordnet, welches reversibel verformbar ist, und welches derart ausgebildet ist, dass in einem ersten, dem sogenannten ON-Zustand, in welchem die Reinigungsvorrichtung (103) mit Luft beaufschlagt ist, das Membran-Element (106) derart verformt ist, dass die eine oder die mehreren Entwässerungsöffnungen (109) verschlossen sind, und dass in einem zweiten, dem sogenannten OFF-Zustand, in welchem die Reinigungsvorrichtung (103) nicht mit Luft beaufschlagt ist, das zumindest eine Membran-Element (106) derart verformt ist, dass die eine oder die mehreren Entwässerungsöffnungen (109) zumindest teilweise nicht verschlossen sind.

## Beschreibung

Die Erfindung betrifft ein Abschlussscheiben-Reinigungssystem umfassend
- eine Abschlussscheibe zum Verschließen einer Öffnung eines Gehäuses sowie
- eine Reinigungsvorrichtung,
wobei die Abschlussscheibe transparent ausgebildet ist.

Weiters betrifft die Erfindung eine Gehäuseeinrichtung zum Einbau in ein Kraftfahrzeug, wobei die Gehäuseeinrichtung ein Gehäuse umfasst, welches zur Aufnahme von einem oder mehreren Lichtmodulen und/oder von einer oder mehreren Sensoreinrichtungen und/oder zur Befestigung von einem oder mehreren Lichtmodulen und/oder von einer oder mehreren Sensoreinrichtungen an dem Gehäuse eingerichtet ist, wobei das Gehäuse eine Öffnung aufweist, und wobei die Gehäuseeinrichtung ein solches Abschlussscheiben-Reinigungssystem umfasst, wobei die Öffnung des Gehäuses mit der Abschlussscheibe des Abdeckscheiben-Reinigungssystems verschlossen ist.

Bei der Verwendung von Lichtmodulen zur Erzeugung von Lichtverteilungen in Fahrzeugscheinwerfern bzw. Fahrzeugleuchten, wie z.B. Fahrzeugheckleuchten, insbesondere aber auch bei der Integration von optischen Sensoren in solche Fahrzeugscheinwerfer oder Fahrzeugleuchten, oder bei der Verwendung von optischen Sensoren, die in einem entsprechenden Sensorgehäuse untergebracht sind, sind die Anforderungen an eine freie Sicht für die Lichtmodule und insbesondere die optischen Sensoren hoch, da eine zuverlässige Funktion andernfalls nicht gegeben ist. Dementsprechend sind Abschlussscheiben, z.B. klare Abdeckscheiben oder Streuscheiben, entsprechend zuverlässig zu reinigen.

Der Begriff "transparent" bezieht sich dabei auf den oder die Wellenlängenbereiche, in welchen die in dem Gehäuse bzw. in der Gehäuseeinrichtung hinter der Abschlussscheibe angeordneten Einrichtungen, z.B. Lichtmodule, Sensoren, etc. elektromagnetische Strahlung emittieren und/oder empfangen, d.h., die Abschlussscheibe ist für diese Wellenlängen bzw.

Wellenlängenbereiche transparent. Die Abschlussscheibe kann dabei in unterschiedlichen Bereichen auch unterschiedliche transparent ausgebildet sein, abhängig von den dahinter angeordneten Einrichtungen.

Besonderes für "optisch" transparente Abschlussscheiben, d.h. Abschlussscheiben, die im Wellenlängenbereich des sichtbaren Lichtes transparent sind, ist eine zuverlässige Reinigung besonders wichtig.

Beispiele für aktuell verfügbare Reinigungssysteme sind Scheibenwischer, Waschdüsen, Hochdruckwaschdüsen, oder eine Luftdruckreinigung für die Abschlussscheibe eines Fahrzeugscheinwerfers bzw. einer Fahrzeugleuchte.

Die Reinigung mittels mechanisch beweglicher Teile ist konstruktiv aufwändig und kann teuer sein. Die Verwendung von Scheibenwischern kann in Bezug auf Fußgängerschutz problematisch sein, Hochdruckreinigungssysteme leiden häufig an einem hohen Wasserverbrauch und die Reinigungsqualität ist häufig nur mäßig.

Es ist eine Aufgabe der Erfindung, eine Lösung zur Reinigung einer Abschlussscheibe einer Gehäuseeinrichtung, die zum Einbau in ein Kraftfahrzeug geeignet ist, wobei die Gehäuseeinrichtung z.B. (wesentlicher) Teil eines Fahrzeugscheinwerfers, einer Fahrzeugleuchte oder eines Sensorgehäuses ist, anzugeben, wobei diese Lösung auf nichtmechanischen Ansätzen beruht, und zugleich eine effiziente und gezielte Reinigung ermöglicht. Der optische Pfad soll nicht unterbrochen werden und die Designmöglichkeiten in Hinblick auf den Fahrzeugscheinwerfer bzw. die Fahrzeugleuchte oder das Sensorgehäuse sollen möglichst wenig eingeschränkt sein.

Diese Aufgabe wird mit einem eingangs genannten Abschlussscheiben-Reinigungssystem dadurch gelöst, dass erfindungsgemäß die Reinigungsvorrichtung einen Luftanschluss, über welchen der Reinigungsvorrichtung Luft zugeführt werden kann, sowie einen Luftauslass aufweist, und wobei in der Reinigungsvorrichtung ein Luftführungskanal ausgebildet ist, welcher in den Luftauslass mündet, wobei über den Luftführungskanal die der Reinigungsvorrichtung zugeführte Luft zu dem Luftauslass strömt, aus diesem in Form eines Luftstromes austritt, welcher, zur Reinigung der Abschlussscheibe, die Außenfläche der Abschlussscheibe beaufschlagt, wobei in Einbaulage der Abschlussscheibe der Luftauslass in einem unteren Bereich der Abschlussscheibe angeordnet ist, derart dass der Luftstrom von unten auf die Außenfläche der Abschlussscheibe gerichtet ist, und wobei an einer Unterseite ein oder mehrere, in einen Außenraum führende Entwässerungsöffnungen vorgesehen sind, über welche in der Reinigungsvorrichtung, beispielsweise in dem Luftführungskanal befindliche Feuchtigkeit bzw. Flüssigkeit, etwa Wasser, austreten kann, wobei - in Einbaulage - oberhalb der einen oder den mehreren Entwässerungsöffnungen zumindest ein Membran-Element angeordnet ist, welches reversibel verformbar ist, und welches derart ausgebildet ist, dass in einem ersten, dem sogenannten ON-Zustand, in welchem die Reinigungsvorrichtung mit Luft beaufschlagt ist, das zumindest eine Membran-Element derart verformt ist, dass die eine oder die mehreren Entwässerungsöffnungen verschlossen sind, und dass in einem zweiten, dem sogenannten OFF-Zustand, in welchem die Reinigungsvorrichtung nicht mit Luft beaufschlagt ist, das zumindest eine Membran-Element derart verformt ist, dass die eine oder die mehreren Entwässerungsöffnungen zumindest teilweise nicht verschlossen sind.

Im ON-Zustand wir durch die z.B. von einem Kompressor einströmende Luft das Membran-Element derart verformt, dass die eine oder die mehreren Entwässerungsöffnungen verschlossen werden. Dadurch kann sich in der Reinigungsvorrichtung ein Luftstrom aufbauen, der auf die Abschlussscheibe gerichtet ist, sodass diese mit diesem Luftstrom gereinigt wird. Nach dem Abschalten z.B. des Kompressors ist das Membran-Element nicht mehr mit einströmender Luft beaufschlagt und verformt sich in seinen Ursprungszustand zurück, sodass die eine oder die mehreren Entwässerungsöffnungen wieder offen sind.

Durch die, insbesondere bauraumbedingte, Montage der Reinigungsvorrichtung derart dass der Luftauslass sich unterhalb der Abdeckscheibe befindet (sodass die Luft nach Oben gerichtet ausströmt), kann allerdings Wasser von Oben in die Reinigungsvorrichtung einlaufen. Wasser kann dabei auf vielfältige Weise in die Reinigungsvorrichtung eintreten, beispielsweise durch Regen, an der Abschlussscheibe kondensierte Feuchtigkeit, schmelzenden Schnee oder Eis auf der Scheibe, Wasser einer Fahrzeugwaschanlage, oder durch Wasser, das von einer zusätzlichen, zur Reinigung der Abschlussscheibe zusätzlich vorgesehen Wasserdüse, mit der die Abschlussscheibe mittels Wasser, insbesondere mittels eines Wasserstrahls gereinigt werden kann, stammt.

Wasser, das sich in der Reinigungsvorrichtung sammeln kann, kann entsprechend über die zumindest eine Entwässerungsöffnung aus der Reinigungsvorrichtung austreten. Die Reinigungsvorrichtung kann somit gezielt entwässert werden, in dem nach Abschalten der Luftzufuhr, also im OFF-Zustand, das Membran-Element die zumindest eine Entwässerungsöffnung wieder öffnet.

Dies ist insofern von zentraler Bedeutung, da Wasser, das in die Reinigungsvorrichtung gelangt, zu Beschädigungen an der Reinigungsvorrichtung oder umliegenden Systemen (z.B. an einem Kompressor, der Druckluft für die Reinigungsvorrichtung bereitstellt, etc.) führen kann. Beispielsweise kann es zu einem Einfrieren der Reinigungsvorrichtung oder der Luftzuleitung kommen, etc. Es kann auch der Fall auftreten, dass sich Flüssigkeit in der Reinigungsvorrichtung sammelt und beim nächsten Reinigungsvorgang auf die Abschlussscheibe geblasen wird, was zu einer Verunreinigung der Abschlussscheibe führen kann.

Die Reinigungsvorrichtung, insbesondere deren Luftauslass, ist dabei außerhalb der Gehäuseeinrichtung, platziert, sodass die Außenseite des Abschlussscheibe mit dem Luftstrom zur Reinigung beaufschlagt werden kann.

Vorzugsweise ist die Reinigungsvorrichtung aus einem Körper gebildet, an dessen Unterseite, vorzugsweise - in Einbaulage - in einem untersten Bereich, ein Auslass angeordnet ist, in welchem Auslass die eine oder mehreren Entwässerungsöffnungen angeordnet sind. Die Entwässerung befindet sich somit vorzugsweise an der tiefsten Stelle der Reinigungsvorrichtung, sodass eingedrungenes Wasser gesammelt ablaufen kann.

Dabei kann der Auslass in Form eines Auslassrohres ausgebildet sein, welches von der Unterseite des Körpers absteht, wobei das Auslassrohr in den Körper der Reinigungsvorrichtung, in den Luftführungskanal, mündet, und wobei das Auslassrohr zum Außenraum hin offen ausgebildet ist.

Das Auslassrohr kann dabei einen beliebigen Querschnitt aufweisen, beispielsweise kreisförmig, insbesondere aber auch rechteckförmig oder quadratisch.

Dabei kann vorgesehen sein, dass in dem Auslassrohr, vorzugsweise unterhalb des Körpers, ein Auflageelement, z.B. eine Auflageplatte, welche sich über einen vollständigen Querschnitt des Auslassrohres erstreckt, angeordnet ist, wobei vorzugsweise die eine oder die mehreren Entwässerungsöffnungen in dem Auflageelement angeordnet sind.

Vorzugsweise ist das das zumindest eine Membran-Element in dem Auslassrohr angeordnet und liegt an einer Oberseite des Auflageelementes, zumindest teilweise oder vollständig, abhängig vom OFF- oder ON-Zustand, auf dem Auflageelement auf.

Vorzugsweise sind mehrere Entwässerungsöffnungen vorgesehen, welche in der Auflageplatte, z.B. gitterförmig, angeordnet sind.

Es kann vorgesehen sein, dass der Luftauslass schlitzförmig ausgebildet ist. Dadurch kann ein starker und/oder möglichst gut auf die Abschlussscheibe gerichteter Luftstrom erzeugt werden.

Vorzugsweise erstreckt sich der Luftauslass über eine gesamte Breite der Abschlussscheibe.

Das Membran-Element ist vorzugsweise flächig ausgebildet, und in einem OFF-Zustand, d.h. ohne Beaufschlagung mit Luft, insbesondere Druckluft, durchgebogen, insbesondere am Rand aufgebogen, d.h. nach oben gebogen, sodass Wasser nach unten durch die eine oder die mehreren Entwässerungsöffnungen ablaufen kann.

Weiters kann dabei vorgesehen sein, dass wenn das Membran-Element flächig ausgebildet ist, es in einem ON-Zustand, d.h. bei Beaufschlagung mit Luft, insbesondere Druckluft, im Wesentlichen eben ausgebildet ist, sodass es z.B. eben auf einem Auflageelement, insbesondere einer Auflageplatte aufliegen kann.

Im ON-Zustand kann somit das Membran-Element eben sein.

Beispielsweise ist bei einem (im ON-Zustand) quadratischen oder rechteckigen Membran-Element dieses im OFF-Zustand am Rand, konkret an zwei einander gegenüberliegenden Seiten, aufgebogen. Im ON-Zustand drückt der Luftdruck das (im OFF-Zustand gebogene) Membran-Element nach unten, sodass das Membran-Element die eine oder die mehreren Entwässerungsöffnungen verschließt, und sich ein entsprechender Luftstrom zur Reinigung der Abschlussscheibe aufbauen kann.

Vorzugsweise hat dabei das Membran-Element eine Ausdehnung (Länge und Breite, oder Radius) derart, dass im ON-Zustand alle Entwässerungsöffnungen vollständig abgedeckt sind.

Beispielsweise ist das zumindest eine Membran-Element aus einem elastischen Material, etwa einem elastischen Kunststoff, beispielsweise aus einem Silikon, gefertigt.

Wie eingangs bereits erwähnt, wird die erfindungsgemäße Aufgabe auch mit einer Gehäuseeinrichtung gelöst.

Vorzugsweise ist dabei die Reinigungsvorrichtung an dem Gehäuse angeordnet, z.B. an diesem befestigt, oder einstückig mit dem Gehäuse ausgebildet.

Es kann vorgesehen sein, dass in dem Gehäuse ein oder mehrere Lichtmodule und/oder ein oder mehrere Sensoreinrichtungen angeordnet, und/oder diese an dem Gehäuse befestigt sind.

Beispielsweise bildet somit die Gehäuseeinrichtung einen Kfz-Scheinwerfer, der ein oder mehreren Lichtmodule zur Erzeugung von Lichtverteilungen (z.B. Abblendlicht, Fernlicht, Tagfahrlicht, usw.), oder eine Fahrzeugleuchte (z.B. Rückleuchte), wobei der Kfz-Scheinwerfer oder die Fahrzeugleuchte auch einen oder mehrere Sensoren, insbesondere "optische" Sensoren, d.h. Sensoren, die mit Wellenlängen im sichtbaren Bereich arbeiten, beinhalten kann. Es kann sich bei der Gehäuseeinrichtung aber auch um eine "reine" SensorAnordnung handeln, bei welcher im Gehäuse lediglich ein oder mehrere Sensoren, beispielsweise optische Sensoren, angeordnet sind.

Im Folgenden ist die Erfindung anhand der nicht einschränkenden Zeichnungen näher erläutert. In dieser zeigt
Fig. 1 ein Kraftfahrzeug mit einer erfindungsgemäßen Gehäuseeinrichtung,
Fig. 2 eine Gehäuseeinrichtung in Form einer Beleuchtungseinrichtung, z.B. eines Fahrzeugscheinwerfers, mit einer Reinigungsvorrichtung, in einer perspektivischen Ansicht,
Fig. 3 eine Gehäuseeinrichtung in Form einer Beleuchtungseinrichtung, z.B. eines Fahrzeugscheinwerfers, mit einer Reinigungsvorrichtung, in einer Ansicht von Vorne,
Fig. 4 eine Detailansicht eines Teils der Reinigungsvorrichtung,
Fig. 5 die Reinigungsvorrichtung im Bereich des Auslasses, im OFF-Zustand, in einem Vertikalschnitt,
Fig. 6 die Reinigungsvorrichtung im Bereich des Auslasses, im ON-Zustand, in dem Vertikalschnitt aus Figur 5,
Fig. 7 eine Schnittansicht mit Draufsicht auf den Auslass im Bereich einer Auflageplatte mit Entwässerungsöffnungen ohne Membran-Element, und
Fig. 8 die Ansicht aus Figur 7, mit einem Membran-Element im ON-Zustand.

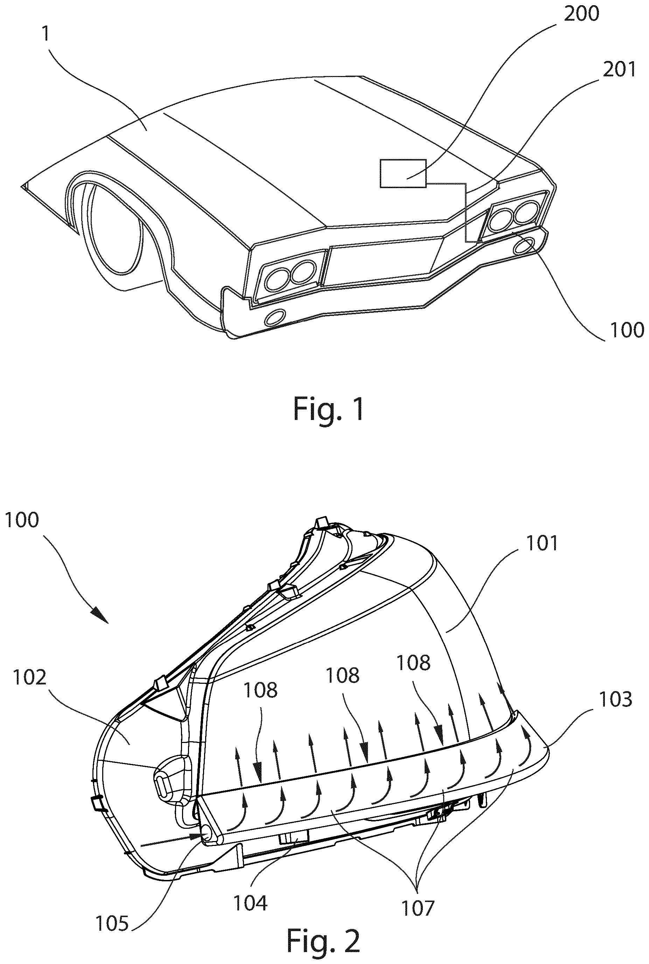

**Figur 1** zeigt beispielhaft ein Kraftfahrzeug 1 mit einer Gehäuseeinrichtung 100, welche in das Kraftfahrzeug 1 an seiner Vorderseite eingebaut ist. In dem gezeigten Beispiel wird davon ausgegangen, dass es sich bei der Gehäuseeinrichtung 100 um einen Kraftfahrzeugscheinwerfer handelt. Alle im Folgenden getroffenen Ausführungen gelten allerdings unabhängig davon, ob es sich bei der Gehäuseeinrichtung 100 um einen Kraftfahrzeugscheinwerfer oder eine andere im Rahmen der Erfindung wie einleitend beschriebene mögliche Ausgestaltung handelt, und unabhängig davon, ob sie an der Fahrzeugvorderseite, Rückseite, oder in anderen Bereichen angeordnet ist, und auch unabhängig davon, welche Elemente (Lichtmodule und/oder Sensoren) in bzw. an der Gehäuseeinrichtung (hinter der Abschlussscheibe) angeordnet sind.

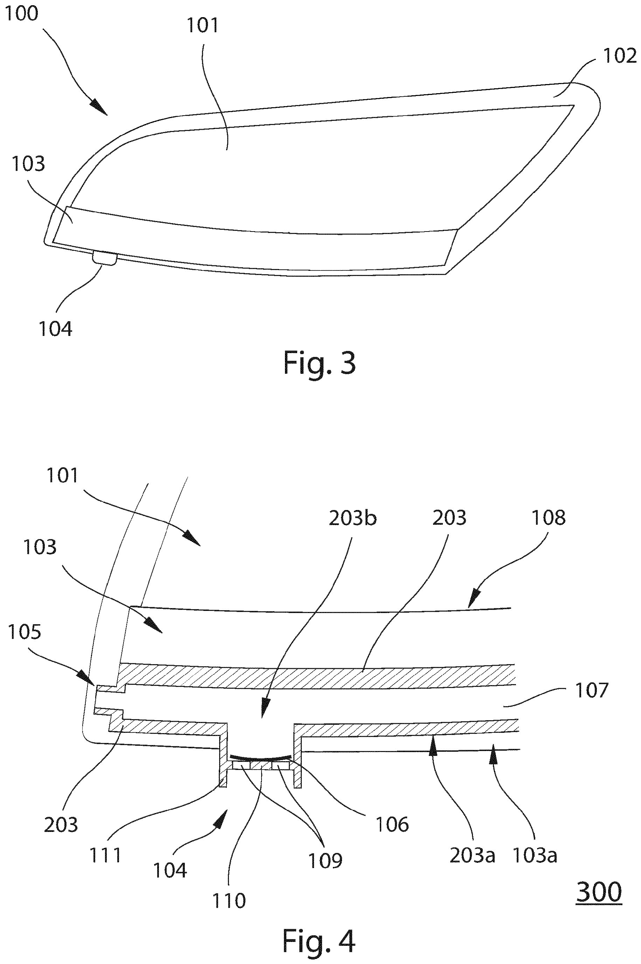

**Figur 2** zeigt die Gehäuseeinrichtung 100 in einer perspektivischen Darstellung, **Figur 3** in einer Ansicht von vorne. Die Einrichtung 100 umfasst ein Gehäuse 102, welches zur Aufnahme von einem oder mehreren Lichtmodulen und/oder von einer oder mehreren Sensoreinrichtungen eingerichtet ist. Das Gehäuse 102 weist an seiner Vorderseite eine Öffnung auf, welche von einer transparenten Abschlussscheibe 101 verschlossen ist, hinter welcher sich das oder die beschriebenen Elemente (Lichtmodule(e) und/oder Sensoreinrichtung(en)) befinden.

Die Abschlussscheibe 101 bildet zusammen mit einer Reinigungsvorrichtung 103 ein sogenanntes Abschlussscheiben-Reinigungssystem.

Die Reinigungsvorrichtung 103 verfügt über einen Luftanschluss 105, über welchen der Reinigungsvorrichtung 103 Luft zugeführt werden kann, sowie über einen Luftauslass 108, wobei in der Reinigungsvorrichtung 103 ein Luftführungskanal 107 ausgebildet ist, welcher in den Luftauslass 108 mündet. Über den Luftführungskanal 107 strömt die der Reinigungsvorrichtung 103 zugeführte Luft zu dem Luftauslass 108, um aus diesem in Form eines Luftstromes auszutreten. Mit diesem Luftstrom wird die Abschlussscheibe 101 an ihrer Außenfläche beaufschlagt.

Die über den Luftanschluss 105 zugeführte Luft wird beispielsweise von einem fahrzeugseitig vorhandenen Kompressor 200 erzeugt und über eine Leitung 201 (Figur 1), die in den Luftanschluss 105 mündet, der Reinigungsvorrichtung 103 zugeführt.

In Einbaulage der Abschlussscheibe 100 bzw. der Gehäuseeinrichtung 100 befindet sich der Luftauslass 108 in einem unteren Bereich der Abschlussscheibe 101, derart, dass der Luftstrom von unten auf die Außenfläche der Abschlussscheibe 101 gerichtet ist.

Die Reinigungsvorrichtung 103 ist beispielsweise aus einem Körper 203 gebildet, der z.B. Innen hohl ausgebildet ist (Hohlraum) bzw. eine Durchströmkammer aufweist, wodurch der Luftführungskanal 107 gebildet ist, welcher in den Luftauslass 108 mündet.

An einer Unterseite 103a der Reinigungsvorrichtung 103 bzw. des Körpers 203 (Unterseite 203a) sind ein oder mehrere, in einen Außenraum führende Entwässerungsöffnungen 109 vorgesehen, über welche in der Reinigungsvorrichtung 103 bzw. in dem Körper 203, beispielsweise in dem Luftführungskanal 107 befindliche Feuchtigkeit bzw. Flüssigkeit, etwa Wasser, austreten kann.

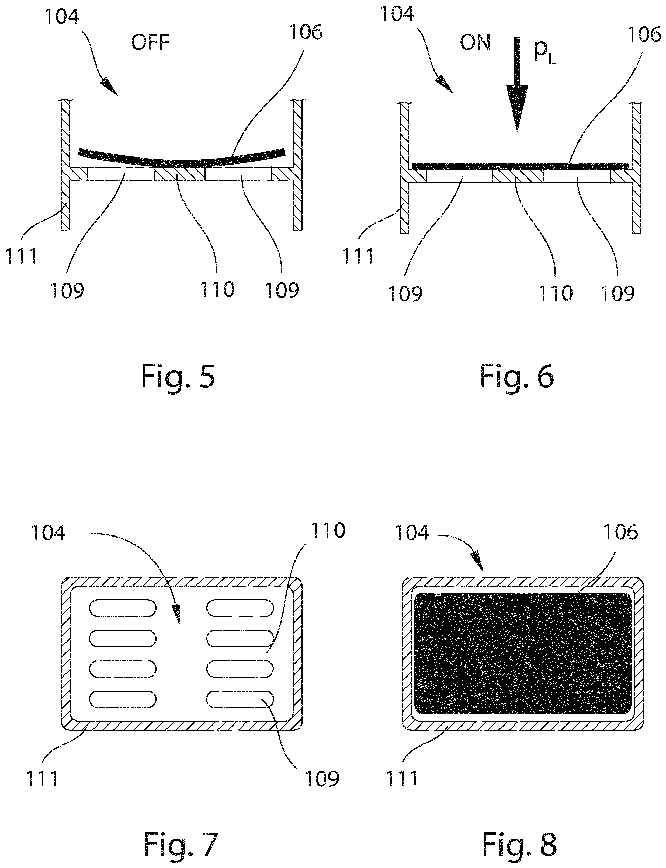

Weiters ist - in Einbaulage - oberhalb der einen oder der mehreren Entwässerungsöffnungen 109 zumindest ein Membran-Element 106 angeordnet **(****Figuren 4 - 6****),** welches reversibel verformbar ist, und welches derart ausgebildet ist, dass in einem ersten, dem sogenannten ON-Zustand, in welchem die Reinigungsvorrichtung 103 mit Luft beaufschlagt ist, das zumindest eine Membran-Element 106 derart verformt ist, dass die eine oder die mehreren Entwässerungsöffnungen 109 verschlossen sind **(****Figur 6****),** und dass in einem zweiten, dem sogenannten OFF-Zustand, in welchem die Reinigungsvorrichtung 103 nicht mit Luft beaufschlagt ist, das zumindest eine Membran-Element 106 derart verformt ist, dass die eine oder die mehreren Entwässerungsöffnungen 109 zumindest teilweise nicht verschlossen sind **(****Figur 5****).** Vorzugsweise sind im OFF-Zustand alle Entwässerungsöffnungen vollständig offen.

Konkret kann, wie dargestellt, vorgesehen sein, dass an der Unterseite 203a des Körpers 203, welcher die Reinigungsvorrichtung 103 bildet, in einem unteren, vorzugsweise in einem bzw. dem untersten Bereich, ein Auslass 104 angeordnet ist, in welchem Auslass 104 die eine oder mehreren Entwässerungsöffnungen 109 angeordnet sind. Die Entwässerung befindet sich somit vorzugsweise an der tiefsten Stelle der Reinigungsvorrichtung 103 bzw. des Körpers 203, sodass eingedrungenes Wasser gesammelt ablaufen kann.

Im ON-Zustand wird durch die z.B. von dem Kompressor 200 einströmende Luft das Membran-Element derart verformt, dass die eine oder die mehreren Entwässerungsöffnungen verschlossen werden. Dadurch kann sich in der Reinigungsvorrichtung ein Luftstrom aufbauen, der auf die Abschlussscheibe gerichtet ist, sodass diese mit diesem Luftstrom gereinigt wird. Nach dem Abschalten des Kompressors ist das Membran-Element nicht mehr mit einströmender Luft beaufschlagt und verformt sich in seinen Ursprungszustand zurück, sodass die eine oder die mehreren Entwässerungsöffnungen wieder offen sind.

Durch die, insbesondere bauraumbedingte, Montage der Reinigungsvorrichtung derart, dass der Luftauslass sich unterhalb der Abdeckscheibe befindet (sodass die Luft nach Oben gerichtet ausströmt), kann allerdings Wasser von Oben in die Reinigungsvorrichtung einlaufen. Wasser kann dabei auf vielfältige Weise in die Reinigungsvorrichtung eintreten, beispielsweise durch Regen, an der Abschlussscheibe kondensierte Feuchtigkeit, schmelzenden Schnee oder Eis auf der Scheibe, oder durch Wasser, das von einer zusätzlichen, zur Reinigung der Abschlussscheibe zusätzlich vorgesehen Wasserdüse, mit der die Abschlussscheibe mittels Wasser, insbesondere mittels eines Wasserstrahls gereinigt werden kann, stammt.

Wasser, das sich in der Reinigungsvorrichtung sammelt, kann entsprechend über die zumindest eine Entwässerungsöffnung 109 aus der Reinigungsvorrichtung austreten. Die Reinigungsvorrichtung kann somit gezielt entwässert werden, in dem nach Abschalten der Luftzufuhr, also im OFF-Zustand, das Membran-Element die zumindest eine Entwässerungsöffnung wieder öffnet.

Dabei kann der Auslass 104 in Form eines Auslassrohres 111 ausgebildet sein, welches von der Unterseite des Körpers 203 absteht, wobei das Auslassrohr 111 über eine Öffnung 203b in den Körper 203 der Reinigungsvorrichtung 103 hinein, d.h. in den Luftführungskanal 107 hinein, mündet, und wobei das Auslassrohr 111 zum Außenraum 300 hin offen ausgebildet ist.

Das Auslassrohr kann dabei einen beliebigen Querschnitt aufweisen, beispielsweise kreisförmig, insbesondere aber auch rechteckförmig oder quadratisch.

In dem Auslassrohr 111, vorzugsweise unterhalb des Körpers 203, ist ein Auflageelement, z.B. eine Auflageplatte 110, welche sich über einen vollständigen Querschnitt des Auslassrohres 111 erstreckt, angeordnet, wobei die eine oder in dem gezeigten Beispiel die mehreren Entwässerungsöffnungen 109 in dem Auflageelement angeordnet sind.

Das Membran-Element 106 ist in dem Auslassrohr 111 angeordnet und liegt an einer Oberseite des Auflageelementes 110, zumindest teilweise oder vollständig, abhängig vom OFF- oder ON-Zustand, auf diesem auf.

Die Entwässerungsöffnungen 109 sind in dem gezeigten Beispiel gitterförmig angeordnet (siehe **Figur 7**)**.**

Der Luftauslass 108 ist vorzugsweise schlitzförmig ausgebildet, wodurch ein starker und/oder möglichst gut auf die Abschlussscheibe gerichteter Luftstrom erzeugt werden kann.

Vorzugsweise erstreckt sich der Luftauslass 108 über eine gesamte Breite der Abschlussscheibe 101.

Der Luftauslass ist vorzugsweise unterhalb des untersten Bereiches der Abschlussscheibe, vorzugsweise möglichst nahe zu dieser Abschlussscheibe, etwa ohne Abstand angeordnet.

Das Membran-Element 106 ist vorzugsweise flächig ausgebildet, und in einem OFF-Zustand, d.h. ohne Beaufschlagung mit Luft, insbesondere Druckluft, durchgebogen, insbesondere am Rand aufgebogen, d.h. nach oben gebogen, sodass Wasser nach unten durch die eine oder die mehreren Entwässerungsöffnungen ablaufen kann **(****Figur 5****).**

Im ON-Zustand **(****Figur 6, Figur 8****),** d.h. bei Beaufschlagung mit Luft, insbesondere Druckluft, ist das Membran-Element 106 im Wesentlichen eben ausgebildet, sodass es z.B. eben auf einem Auflageelement, insbesondere einer Auflageplatte 110 aufliegt. Im ON-Zustand ist somit das Membran-Element eben.

Beispielsweise ist bei einem (im ON-Zustand) quadratischen oder rechteckigen Membran-Element dieses im OFF-Zustand am Rand, konkret an zwei einander gegenüberliegenden Seiten, aufgebogen **(****Figur 5****).** Im ON-Zustand drückt der Luftdruck p_{L} das (im OFF-Zustand gebogene) Membran-Element nach unten **(****Figur 6****),** sodass das Membran-Element die eine oder die mehreren Entwässerungsöffnungen 109 verschließt, und sich ein entsprechender Luftstrom zur Reinigung der Abschlussscheibe aufbauen kann.

### Vorzugsweise hat dabei das Membran-Element eine Ausdehnung (Länge und Breite, oder Radius) derart, dass im ON-Zustand alle Entwässerungsöffnungen vollständig abgedeckt sind

Die Reinigungsvorrichtung 103 ist vorzugsweise an dem Gehäuse 102 angeordnet.

Es kann vorgesehen sein, dass in dem Gehäuse 102 ein oder mehrere Lichtmodule und/oder ein oder mehrere Sensoreinrichtungen angeordnet, und/oder dies an dem Gehäuse 102 befestigt sind.

Beispielsweise bildet somit die Gehäuseeinrichtung einen Kfz-Scheinwerfer, der ein oder mehreren Lichtmodule zur Erzeugung von Lichtverteilungen (z.B. Abblendlicht, Fernlicht, Tagfahrlicht, usw.), oder eine Fahrzeugleuchte (z.B. Rückleuchte), wobei der Kfz-Scheinwerfer oder die Fahrzeugleuchte auch einen oder mehrere Sensoren, insbesondere "optische" Sensoren, d.h. Sensoren, die mit Wellenlängen im sichtbaren Bereich arbeiten, beinhalten kann. Es kann sich bei der Gehäuseeinrichtung aber auch um eine "reine" SensorAnordnung handeln, bei welcher im Gehäuse lediglich ein oder mehrere Sensoren, beispielsweise optische Sensoren, angeordnet sind.

Durch die erfindungsgemäße Entwässerung ergeben sich unter anderem folgende Vorteile:
- es wird verhindert, dass Wasser in den Luftkompressor gelangen kann;
- ein Einfrieren der Luftzuleitung kann verhindert werden;
ein Verschmutzen der Abschlussscheibe beim Reinigungsvorgang kann verhindert werden, sodass sich die Reinigungsqualität verbessert.

## Patentansprüche

1. Abschlussscheiben-Reinigungssystem umfassend
- eine Abschlussscheibe (101) zum Verschließen einer Öffnung eines Gehäuses (102) sowie
- eine Reinigungsvorrichtung (103),
wobei die Abschlussscheibe (101) transparent ausgebildet ist,
wobei die Reinigungsvorrichtung (103)
- einen Luftanschluss (105), über welchen der Reinigungsvorrichtung (103) Luft zugeführt werden kann, sowie
- einen Luftauslass (108)
aufweist,
und wobei in der Reinigungsvorrichtung (103) ein Luftführungskanal (107) ausgebildet ist, welcher in den Luftauslass (108) mündet, wobei über den Luftführungskanal (107) die der Reinigungsvorrichtung (103) zugeführte Luft zu dem Luftauslass (108) strömt, aus diesem in Form eines Luftstromes austritt, welcher, zur Reinigung der Abschlussscheibe (101), die Außenfläche der Abschlussscheibe (101) beaufschlagt,
wobei in Einbaulage der Abschlussscheibe (100) der Luftauslass (108) in einem unteren Bereich der Abschlussscheibe (101) angeordnet ist, derart dass der Luftstrom von unten auf die Außenfläche der Abschlussscheibe (101) gerichtet ist,
und wobei an einer Unterseite (103a) ein oder mehrere, in einen Außenraum führende Entwässerungsöffnungen (109) vorgesehen sind, über welche in der Reinigungsvorrichtung (103), beispielsweise in dem Luftführungskanal (107) befindliche Feuchtigkeit bzw. Flüssigkeit, etwa Wasser, austreten kann,
wobei - in Einbaulage - oberhalb der einen oder den mehreren Entwässerungsöffnungen (109) zumindest ein Membran-Element (106) angeordnet ist, welches reversibel verformbar ist, und welches derart ausgebildet ist,
dass in einem ersten, dem sogenannten ON-Zustand, in welchem die Reinigungsvorrichtung (103) mit Luft beaufschlagt ist, das zumindest eine Membran-Element (106) derart verformt ist, dass die eine oder die mehreren Entwässerungsöffnungen (109) verschlossen sind, und
dass in einem zweiten, dem sogenannten OFF-Zustand, in welchem die Reinigungsvorrichtung (103) nicht mit Luft beaufschlagt ist, das zumindest eine Membran-Element (106) derart verformt ist, dass die eine oder die mehreren Entwässerungsöffnungen (109) zumindest teilweise nicht verschlossen sind.

2. System nach Anspruch 1, wobei die Reinigungsvorrichtung (103) aus einem Körper (203) gebildet ist, an dessen Unterseite (203a), vorzugsweise - in Einbaulage - in einem untersten Bereich, ein Auslass (104) angeordnet ist, in welchem Auslass (104) die eine oder mehreren Entwässerungsöffnungen (109) angeordnet sind.

3. System nach Anspruch 2, wobei der Auslass (104) in Form eines Auslassrohres (111) ausgebildet ist, welches von der Unterseite des Körpers (203) absteht, wobei das Auslassrohr (111) in den Körper (203) der Reinigungsvorrichtung (103), in den Luftführungskanal (107), mündet, und wobei das Auslassrohr (111) zum Außenraum (300) hin offen ausgebildet ist.

4. System nach Anspruch 3, wobei in dem Auslassrohr (111), vorzugsweise unterhalb des Körpers (203), ein Auflageelement, z.B. eine Auflageplatte (110), welche sich über einen vollständigen Querschnitt des Auslassrohres (111) erstreckt, angeordnet ist.

5. System nach Anspruch 4, wobei die eine oder die mehreren Entwässerungsöffnungen (109) in dem Auflageelement angeordnet sind.

6. System nach Anspruch 4 oder 5, wobei das zumindest eine Membran-Element (106) in dem Auslassrohr (111) angeordnet ist und an einer Oberseite des Auflageelementes, zumindest teilweise oder vollständig, abhängig vom OFF- oder ON-Zustand, aufliegt.

7. System nach Anspruch 5 oder 6, wobei mehrere Entwässerungsöffnungen (109) vorgesehen sind, welche in der Auflageplatte (110), z.B. gitterförmig, angeordnet sind.

8. System nach einem der Ansprüche 1 bis 7, wobei der Luftauslass (108) schlitzförmig ausgebildet ist.

9. System nach einem der Ansprüche 1 bis 8, wobei der Luftauslass (108) sich über eine gesamte Breite der Abschlussscheibe (101) erstreckt.

10. System nach einem der Ansprüche 1 bis 9, wobei das Membran-Element (106) flächig ausgebildet ist, und in einem OFF-Zustand, d.h. ohne Beaufschlagung mit Luft, insbesondere Druckluft, durchgebogen, insbesondere am Rand aufgebogen, d.h. nach oben gebogen ist.

11. System nach einem der Ansprüche 1 bis 10, wobei das Membran-Element (106) flächig ausgebildet ist, und in einem ON-Zustand, d.h. ohne Beaufschlagung mit Luft, insbesondere Druckluft, im Wesentlichen eben ausgebildet ist, sodass es z.B. eben auf einem Auflageelement, insbesondere einer Auflageplatte (110) aufliegen kann.

12. System nach einem der Ansprüche 1 bis 11, wobei das zumindest eine Membran-Element (106) aus einem elastischen Material, etwa einem elastischen Kunststoff, beispielsweise aus einem Silikon, gefertigt ist.

13. Gehäuseeinrichtung (100) zum Einbau in ein Kraftfahrzeug, wobei die Gehäuseeinrichtung (100) ein Gehäuse (102) umfasst, welches zur Aufnahme von einem oder mehreren Lichtmodulen und/oder von einer oder mehreren Sensoreinrichtungen und/oder zur Befestigung von einem oder mehreren Lichtmodulen und/oder von einer oder mehreren Sensoreinrichtungen an dem Gehäuse (102) eingerichtet ist, wobei das Gehäuse (102) eine Öffnung aufweist, und wobei die Gehäuseeinrichtung (100) ein Abschlussscheiben-Reinigungssystem nach einem der Ansprüche 1 bis 11 umfasst, wobei die Öffnung des Gehäuses (102) mit der Abschlussscheibe (101) des Abdeckscheiben-Reinigungssystems verschlossen ist.

14. Gehäuseeinrichtung nach Anspruch 13, wobei die Reinigungsvorrichtung (103) an dem Gehäuse (102) angeordnet ist.

15. Gehäuseeinrichtung nach Anspruch 13 oder 14, wobei in dem Gehäuse (102) ein oder mehreren Lichtmodule und/oder ein oder mehrere Sensoreinrichtungen angeordnet, und/oder an dem Gehäuse (102) befestigt sind.
